# EUROPÄISCHE PATENTSCHRIFT

(11) **EP 1 700 009 B1**
(45) Veröffentlichungstag und Bekanntmachung des Hinweises auf die Patenterteilung: **31.12.2008**
(21) Anmeldenummer: 04804511.6
(22) Anmeldetag: 03.11.2004
(51) Int. Cl.: F01D 25/14, F01D 25/26

(54) **VERFAHREN ZUM BETREIBEN EINER TURBOMASCHINE, UND TURBOMASCHINE**
METHOD FOR OPERATING A TURBOMACHINE, AND CORRESPONDING TURBOMACHINE
PROCEDE POUR FAIRE FONCTIONNER UNE TURBOMACHINE ET TURBOMACHINE

(30) Priorität: 07.11.2003 DE 10352089
(43) Veröffentlichungstag der Anmeldung: 13.09.2006
(73) Patentinhaber: Alstom Technology Ltd, 5400 Baden (CH)
(72) Erfinder: BIRRELL, Andrew, CH-5415 Rieden (CH); BUSEKROS, Armin, CH-8049 Zürich (CH); OMISORE, Olatunde, CH-5415 Nussbaumen (CH)
(86) Internationale Anmeldenummer: PCT/EP2004/052784
(87) Internationale Veröffentlichungsnummer: WO 2005/045203

(56) Entgegenhaltungen:
- EP-A- 0 503 752
- WO-A-03/038242
- WO-A-20/04090291
- DE-A1- 10 233 113
- US-A- 2 402 841
- US-A1- 2001 022 933

## Beschreibung

### Technisches Gebiet

Die vorliegende Erfindung betrifft ein Verfahren zum Betreiben einer Turbomaschine, sowie eine zur Durchführung besonders geeignete Turbomaschine.

### Stand der Technik

Moderne Gasturbinen werden im hochtemperaturbelasteten Teil häufig mit zweischaligen Gehäusen ausgeführt. Dabei ist zwischen einem inneren Gehäuse und einem äusseren Gehäuse ein Ringraum ausgebildet. Gas innerhalb dieses Ringraums erwärmt sich während des Betriebes sehr stark. Weiterhin bestehen Potentiale zur Ausbildung unerwünschter vertikaler Temperaturschichtungen aufgrund der freien Konvektion in dem Ringraum, was mit dem Einbringen thermischer Spannungen in thermisch wie mechanisch belastete Strukturen einhergeht.

Vergleichbare Geometrien sind auch von anderen Turbomaschinen, wie beispielsweise Dampfturbinen, bekannt, wo tendenziell vergleichbare Phänomene auftreten, wenngleich sich diese im Allgemeinen auf niedrigerem Temperaturniveau abspielen.

Eine Turbomaschine gemäß dem Stand der Technik ist aus Dokument EP 0 503 752 bekannt.

### Darstellung der Erfindung

Aufgabe der Erfindung ist es, an dieser Stelle Abhilfe zu schaffen. Aufgabe der Erfindung ist es also insbesondere, eine Möglichkeit zur Kühlung der Kavität angeben, und sich während des Betriebes der Turbomaschine potenziell einstellende Temperaturschichtungen zu unterbinden.

Erfindungsgemäss wird dies durch das Verfahren nach Anspruch 1 erreicht.

Kern der Erfindung ist es, während des Betriebes der Turbomaschine eine wenigstens mit einer Geschwindigkeitskomponente in Umfangsrichtung der Turbomaschine oder einer torusähnlichen Kavität orientierte Strömung anzuregen. In einer bevorzugten Ausführungsform wird über wenigstens einen Ejektor eine Treibmittelströmung mit einer Umfangskomponente in die Kavität eingeblasen, und dadurch eine erzwungene tangentiale Konvektionsströmung in der Kavität angeregt, welche der freien Konvektionsbewegung wenigstens teilweise entgegengerichtet ist, und welche eine Vergleichmässigung der Temperaturen in der Kavität bewirkt. Es wird bevorzugt Kühlluft oder Umgebungsluft als Treibmittel eingeblasen. Diese Massnahmen bewirken gleichzeitig eine Vergleichmässigung der Temperaturen und eine Kühlung der Kavität. Luft wird dabei gemäss einer Ausführungsform der Erfindung von einem geeigneten Fördermittel, beispielsweise einem Gebläse oder einem Verdichter, zu dem Ejektor oder den Ejektoren gefördert. Gemäss einer zweiten Ausführungsform wird ein Luftstrom im Verdichter einer Gasturbogruppe entnommen und als Treibmittel zu dem wenigstens einen Ejektor geführt. Gemäss einer weiteren Ausführungsform wird Luft aus einem Kühlluftsystem einer Gasturbogruppe entnommen, und als Treibmedium für den wenigstens einen Ejektor verwendet.

Eine Turbomaschine, welche zur Durchführung des erfindungsgemässen Verfahrens grundsätzlich geeignet ist, ist aus WO 03/038243 bekanntgeworden. Das Problem der Kühlung der Kavitäten während des Betriebes der Turbomaschine und die an sich überraschend einfache Abhilfe durch das Eindüsen von Kühlmittel als Treibmittel des Ejektors, welches gleichzeitig eine Vergleichmässigung der Temperaturen bewirkt, ist dort allerdings nicht erkannt worden.

Die Kavität ist insbesondere zwischen einem inneren und einem äusseren Gehäuse der Turbomaschine gebildet, so beispielsweise zwischen einer Brennraumwand und einem Aussengehäuse einer Gasturbine. Hierbei weist die Kavität mit einem im Wesentlichen ringförmigen Querschnitt (Torus) oder einen torusabschnittförmigen Querschnitt in Form eines Ringsegmentes auf. Die Strömung wird dabei bevorzugt durch ein oder mehrere Ejektoren angeregt, die innerhalb der Kavität angeordnet und mit einem Treibfluid wie z. B. Luft betreibbar sind. Ejektoren benötigen nur einen geringen Treibfluid-Massenstrom, um eine für den angestrebten Zweck hinreichende Strömung innerhalb der Kavität anzutreiben. Diese Limitierung des Massenstroms des Treibmediums ist gerade dann wichtig, wenn vorhandene Hilfssysteme zum Antrieb der Strömung benutzt werden sollen, welche kaltes Fluid, beispielsweise Aussenluft, in die Kavität fördern. Der Massenstrom des durch den Ejektor geführten Treibmediums liegt vorzugsweise zwischen 0,2 und 1,0 kg/s. Als Treibfluid kann auch alternativ die Luft aus dem Gasturbinenverdichter oder einem anderen Verdichter verwendet werden, oder es kann Luft aus einem Kühlluftsystem einer Gasturbogruppe abgezweigt werden. Bei Dampfturbinen wird vorzugsweise Dampf eines geeigneten druckes und einer geeigneten Temperatur als Treibfluid verwendet.

Wenn die Kavität einen ringförmigen Querschnitt aufweist und die Ejektoren mit Ihrer Ausblasrichtung im Wesentlichen in Umfangsrichtung orientiert sind, ist bevorzugt, dass eine in Umfangsrichtung orientierte schraubenförmige Strömung mit einem Steigungswinkel von unter 30°, bevorzugt unter 10° erzeugt wird, da bei einer axial ausgedehnten Kavität auf diese Weise auch eine Vergleichmässigung der axialen Temperaturverteilung erzielt werden kann.

Es ist weiterhin von Vorteil in Bezug auf die Intensität der Strömungsanregung, wenn eine Anzahl von zwei oder mehr Ejektoren mit gleichsinniger Orientierung der Ausblasrichtung bevorzugt äquidistant am Umfang der Kavität angeordnet sind. Eine Turbomaschine zur Ausführung der Erfindung umfasst ein Treibfluidplenum, welches über eine gemeinsame Zuführleitung mit Treibfluid versorgt wird, und von welchem wenigstens ein Ejektor, bevorzugt mehrere Ejektoren, und ganz besonders vorteilhaft alle Ejektoren abzweigen. Auf diese Weise ist nur eine zentrale:Einspeisung für das Treibfluid erforderlich, während das Treibfluidplenum die gleichmässige Verteilung auf die verschiednen in die Kavität mündenden Ejektoren bewerkstelligt.

Zur weiteren Verbesserung der Abkühlung der Turbomaschine ist nach einer weiteren Ausführungsform der Erfindung vorgesehen, die Zirkulationsströmung während des Betriebs der Turbomaschine durchgängig aufrecht zu erhalten und nach dem Betrieb, d. h. nach Ausserbetriebnahme der Turbomaschine, in einen zyklischen Betrieb überzugehen. Hierbei wird die Zirkulationsströmung intervallartig erzeugt. Beispielsweise kann im Intervallbetrieb die Strömung für eine Zeit von 1 bis 20 Minuten, vorzugsweise etwa 5 Minuten, aufrechterhalten werden, worauf eine Pause von etwa 15 bis 60, vorzugsweise 30, Minuten folgt. Dieser Vorgang wird dann mehrmals wiederholt, bis eine hinreichende Abkühlung der Turbomaschine erzielt ist. Natürlich können die Intervalle und die Abstände zwischen den Intervallen den Anforderungen entsprechend variiert werden. Insbesondere müssen die Intervalle in ihrer Länge und ihren zeitlichen Abständen nicht gleich sein. Des Weiteren können auch die Abkühlraten (Stärke der Abkühlung pro Zeit) in den einzelnen Intervallen unterschiedlich sein. Zum Beispiel können zu Beginn des Abkühlens höhere und im Folgenden geringere Abkühlraten gewählt werden.

### Kurze Beschreibung der Zeichnungen

Die Erfindung soll nachfolgend anhand der Zeichnung näher erläutert werden. Im Einzelnen zeigen
Fig. 1 einen Teil des thermischen Blockes einer Gasturbine;
Fig. 2 eine schematische Ansicht eines Teils der Gasturbine zur Erläuterung des erfindungsgemäßen Prinzips;
Fig. 3 eine Schnittansicht der in Fig. 1 gezeigten Gasturbine;
Fig. 4 eine weitere Schnittansicht der in Fig. 1 gezeigten Gasturbine.
Fig. 5 eine weitere Vorzugsvariante der Erfindung.

Selbstverständlich stellen die folgenden Figuren nur illustrative Beispiele dar, und sind bei Weitem nicht in der Lage, alle sich dem Fachmann ergebenden Ausführungsformen der Erfindung, wie sie in den Ansprüchen gekennzeichnet ist, darzustellen.

### Weg zur Ausführung der Erfindung

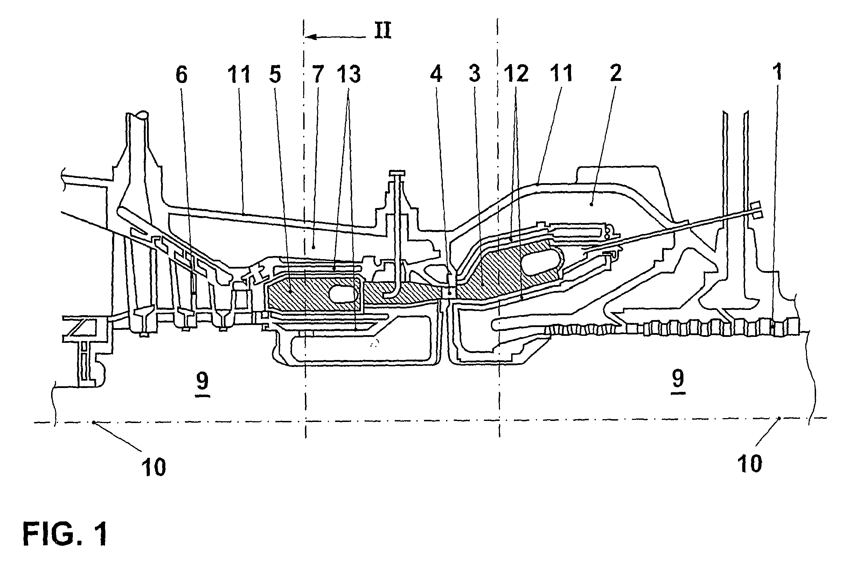

Die Erfindung soll am Beispiel einer Gasturbine erläutert werden. In Figur 1 ist der thermische Block einer Gasturbine dargestellt, wobei nur der oberhalb der Maschinenachse 10 befindliche Teil gezeigt ist. Bei der in Figur 1 dargestellten Maschine handelt es sich um eine Gasturbine mit sogenannter sequentieller Verbrennung, wie sie beispielsweise aus der EP 620362 bekannt ist. Obschon deren Funktionsweise für die Erfindung ohne primäre Bedeutung ist, sei diese der Vollständigkeit halber in groben Zügen erläutert. Ein Verdichter 1 saugt einen Luftmassenstrom an und verdichtet diesen auf einen Arbeitsdruck. Die verdichtete Luft strömt durch ein Plenum 2 in eine erste Brennkammer 3 ein. Dort wird eine Brennstoffmenge eingebracht und in der Luft verbrannt. Das entstehende Heissgas wird in einer ersten Turbine 4 teilentspannt, und strömt in eine zweite Brennkammer 5, eine sogenannte SEV-Brennkammer, ein. Dort zugeführter Brennstoff entzündet sich aufgrund der noch hohen Temperatur des teilentspannten Heissgases. Das nacherhitzte Heissgas wird in einer zweiten Turbine 6 weiter entspannt, wobei eine mechanische Leistung auf die Welle 9 übertragen wird. Im Betrieb herrschen bereits in den letzten Verdichterstufen, erst recht aber im Bereich der Brennkammern 3, 5 und in den Turbinen 4, 6 Temperaturen von mehreren 100 °C. Im Bereich der zweiten Brennkammer 5 ist das Gehäuse der Turbomaschine mehrschalig ausgeführt zwischen einem Aussengehäusse 11 und einem Innengehäusse 13 ist eine ringförmige Kavität ausgebildet. Durch Wärmeeintrag über die Innengehäusewand und das Eindringen verbrauchter Kühlluft oder Heissgas können sich ohne in der Kavität ohne weiteres Temperaturen von bis zu 550°C und sogar noch darüber einstellen. Andererseits ist die Kavität, wenn überhaupt, nur gering vertikal zwangsdurchströmt, was der Ausbildung ausgeprägter vertikaler Temperaturschichtungen förderlich ist, die letzten Endes bis hin zu einem Verzug des Gehäuses führen können.

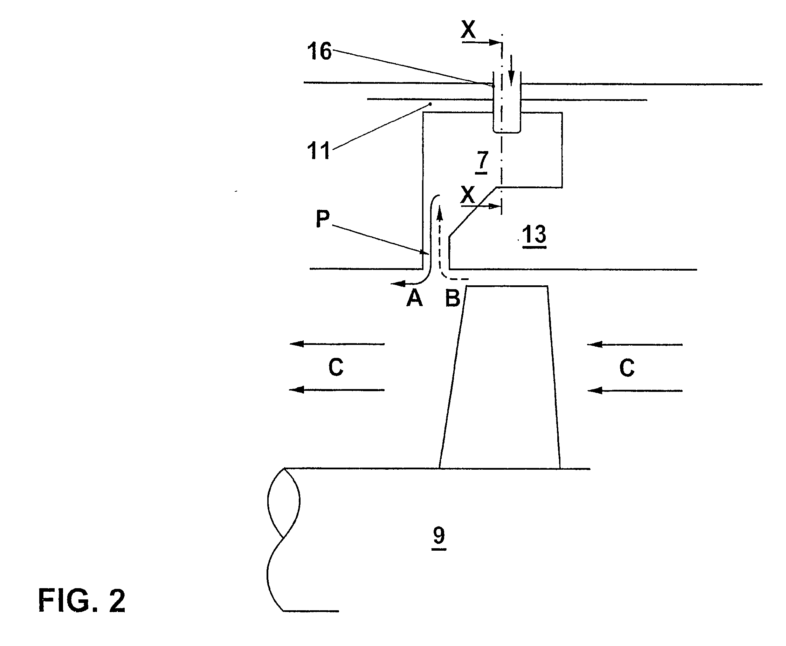

Figur 2 verdeutlicht nun das erfindungsgemäße Prinzip. In der Kavität 7 wird während des Betriebs der Turbine eine in Umfangsrichtung orientierte schraubenförmige Strömung angeregt. Hierzu wird ein Fluid (z. B. Aussenluft) über einen oder mehrere Ejektoren 16 in die Kavität eingeleitet. Die Temperatur des Heissgases im Innern der Kavität 7 zwischen dem Aussengehäuse 11 und dem Innengehäuse 13 liegt ohne Kühlung typischerweise bei ca. 550 °C oder darüber. Dabei dringt beispielsweise Heissgas, welches die Turbomaschine mit einer Temperatur von 600 °C oder mehr in Richtung des Pfeils C durchströmt, über die Öffnung P in die Kavität 7 ein, wie dies durch den Pfeil B angedeutet ist. Durch den Ejektor 16 wird kühleres Medium, beispielsweise über ein Gebläse geförderte Umgebungsluft, oder auch Anzapfluft aus dem Verdichter 1, siehe hierzu Figur 1, oder Kühlluft aus einem Kühlluftsystem, in die Kavität eingebracht. Der Massenstrom des Kühlfluides liegt dabei typischerweise im Bereich von rund 0,2 kg/s bis 1 kg/s. Dies erweist sich als ausreichend, um die Temperatur in der Kavität auf zum Beispiel 400°C abzusenken. Ein Massenäquivalent zum in die Kavität 7 einströmenden Massenstrom strömt als Ausgleichströmung A in die Heissgasströmung C ab. Es ist auch möglich, das erfindungsgemäße Verfahren in einem System durchzuführen, bei dem das Kühlmittel einen geschlossenen Kreislauf über einen Kompressor oder ein Gebläse durchläufe. Hierzu sollte der Innendruck in der Kavität nicht zu hoch sein, da der Kompressor oder das Gebläse gegen das in der Kavität entstehende Druckniveau abgedichtet sein müssen. Nach dem Abstellen der Turbine wird in einer bevorzugten Ausführungsform der Erfindung der Ejektor intermitterend betrieben. Hierdurch wird eine kontrollierte Abkühlung der Maschine erreicht. Es wird durch die genannte Massnahme vermieden, dass das Innengehäuse zu stark bzw. zu schnell abkühlt und das mit einer starken Abkühlung nach dem Abschalten verbundene Spiel zwischen Rotor und Gehäuse zu gering wird. Bevorzugt wird die Kavität in mehreren Kühlungsphasen von etwa fünf Minuten Dauer mit der Kühlluftzuströmung beaufschlagt. Die Zeit zwischen zwei aufeinander folgenden Kühlungsphasen beträgt bevorzugt 30 Minuten. Durch diese zyklische Nachkühlung erfolgt eine besonders schonende Abkühlung der Turbine, so dass unerwünschte, aufgrund natürlicher Konvektion auftretende Effekte wie das gefürchtete "Buckeln" des Gehäuses vermieden werden.

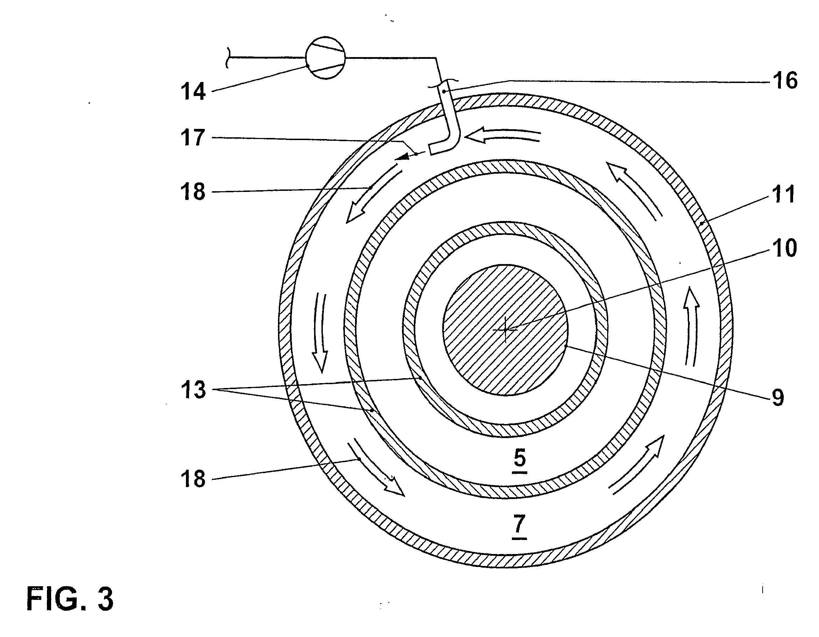

Figur 3 zeigt zur weiteren Veranschaulichung des erfindungsgemäßen Verfahrens einen stark schematisierten Querschnitt durch die Gasturbine von Figur 1 entlang der Linie II-II. Zwischen einem Aussengehäuse 11 der Gasturbine und einer Brennraumwand 13, welche auch als inneres Gehäuse verstanden werden kann, ist die ringförmige Kavität 7 ausgebildet. Der Ejektor 16 bläst von einem Gebläse 14 herangeführte Umgebungsluft, welche deutlich kühler ist als der Fluidinhalt der Kavität 7, mit einer Tangentialkomponente als Treibmittelströmung 17 in die ringförmige Kavität ein. Dort treibt die Treibmittelströmung eine Umfangsströmung 18 an, welche einen Ausgleich der sich aufgrund natürlicher Konvektion einstellenden vertikalen Temperaturschichtung schafft. In der dargestellten Ausführungsform ist der Ejektor an einer geodätisch hochgelegenen Stelle der Kavität angeordnet, woraus eine weitere Unterstützung der Antriebswirkung aufgrund des Dichteunterschiedes zwischen der vergleichsweise kühleren Treibmittelströmung 17 und dem Fluidinhalt der Kavität 7 resultiert. Auf die dargestellte Weise wird der Fluidinhalt der Kavität gekühlt, und gleichzeitig wird die Ausbildung einer potenziell schädlichen stabilen Temperaturschichtung vermieden. Bevorzugt ist zwischen Gebläse 14 und Ejektor 16 ein Rückschlagelement angeordnet, dergestalt, dass ein potenzielles Rückströmen von Heissgas verhindert und eine thermische Belastung des Gebläses 14 vermieden wird. Ein weiterer Vorteil ist, dass leicht gegebenenfalls vorhandene Hilfssysteme, etwa ein ohnehin vorhandenes Druckluftsystem, zur Förderung des Treibmediums angepasst werden können, dergestalt, dass unter Umständen vollständig auf das Gebläse 14 verzichtet werden kann. Zur Vermeidung von Thermoschocks kann das zum Ejektor geförderte Treibmittel vorgängig der Zuleitung zum Ejektor 16 über Wärmetauscherflächen geleitet werden, beispielsweise durch oder über heisse Strukturen der Maschine selbst. Eine Vorwärmung des Treibfluides ist im Betrieb der Turbomaschine ohnehin gewährleistet, wenn das Treibmittel von einer Kompressor-Zwischenanzapfung oder aus dem Kühlluftsystem einer Gasturbogruppe entnommen wird.

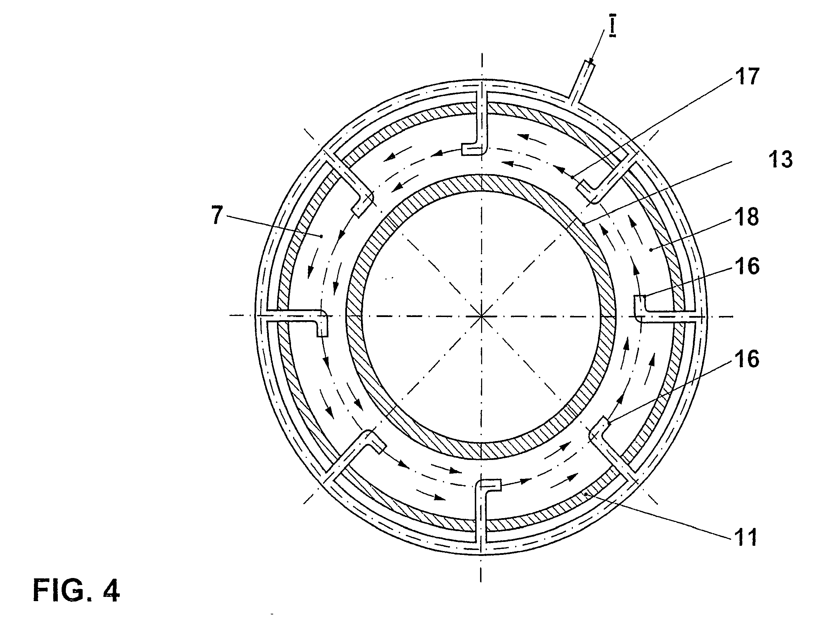

Figur. 4 zeigt eine vorteilhafte Ausführungsform, bei der die Zirkulationsströmung 18 durch mehrere Ejektoren 16 erzeugt wird, die über eine zentrale Zuführleitung I mit dem Treibmedium 17 gespeist werden. Hierzu strömt das Treibfluid über die zentrale Zuführleitung in ein Treibfluidplenum (ohne Bezugszeichen). Das Treibfluidplenum bewerkstelligt eine örtliche Vergleichmässigung und eine homogene Verteilung des Treibfluids. Die Ejektoren zweigen aus dem Treibfluidplenum ab und münden in der Kavität

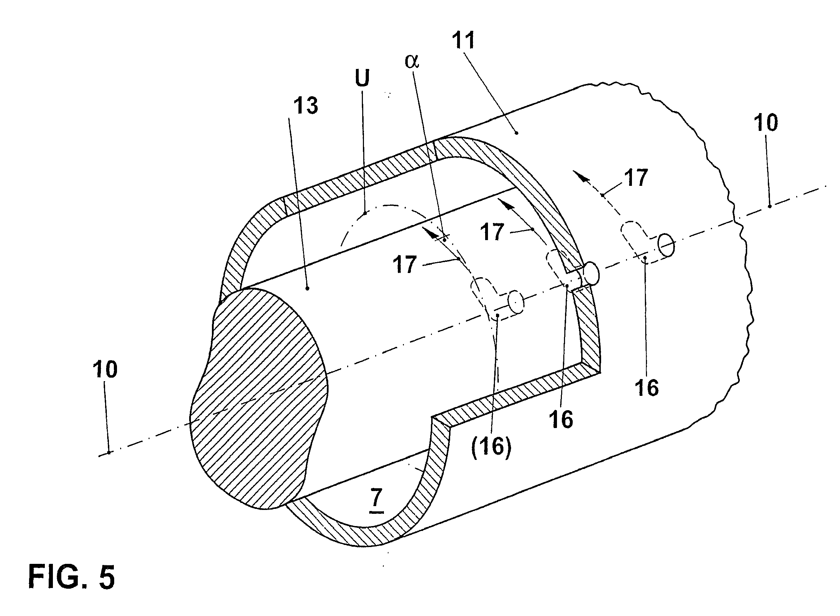

In Figur 5 ist eine perspektivische Darstellung einer ringförmigen Kavität dargestellt. Die innere Begrenzung 13 ist nur schematisch als Vollzylinder dargestellt. Zwischen dieser inneren Begrenzung und einem Aussenmantel 11 ist die Kavität 7 ausgebildet. In axialer Richtung verteilt sind drei durch den Aussenmantel 11 hindurchgeführte, in der Darstellung an sich nicht sichtbare Ejektoren 16 hindurchgeführt, welche schematisch durch gestrichelte Linien angedeutet sind. Die Ejektoren sind so angeordnet, dass die Orientierung der Ausblasrichtung des Treibmediums in axialer Richtung um einen Winkel α gegen die durch eine strichpunktierte Linie U angedeutete Umfangsrichtung geneigt ist. Die Umfangsrichtung U bezieht sich im gezeigten Beispiel auf die Umfangsrichtung der Kavität 7. Um insbesondere die primär angestrebte Umfangsströmung anzuregen, kann dieser Anstellwinkel α auf Werte unter 30°, insbesondere auf Werte kleiner als 10°, eingeschränkt werden. Es stellt sich in Folge eine nicht dargestellte schraubenförmige Durchströmung der Kavität ein, welche weiterhin ein sich gegebenenfalls einstellendes axiales Temperaturgefälle zu vermeiden hilft.

Es ist im Rahmen der Erfindung selbstverständlich auch möglich, andere geeignete Mittel zum Antrieb der Strömung zu verwenden; beispielsweise können Druckwellen auf an sich bekannte Weise zum Antrieb der Strömung in den Kavitäten selbst verwendet werden, oder auch anstelle eines Gebläses zum Antrieb der Treibmittelströmung eines Ejektors.

Der Fachmann erkennt ohne Weiteres, dass die Anwendung der Erfindung keineswegs auf Gasturbinen beschränkt ist, sondern dass die Erfindung in einer Vielzahl weiterer Anwendungsfälle eingesetzt werden kann. Selbstverständlich ist die Anwendung der Erfindung auch nicht auf eine in Figur 1 dargestellte Gasturbine mit sequentieller Verbrennung beschränkt, sondern sie kann auch bei Gasturbinen mit nur einer oder mehr als zwei Brennkammern Anwendung finden. Insbesondere kann die Erfindung auch in Dampfturbinen realisiert werden.

### Bezugszeichenliste

- 1: Verdichter
- 2: Plenum
- 3: Brennkammer
- 4: erste Turbine
- 5: Brennkammer
- 6: zweite Turbine
- 7: Kavität
- 9: Welle
- 10: Maschinenachse
- 11: Aussengehäuse, Aussenmantel, äussere Wand
- 12: inneres Gehäuse, innere Wand, Brennraumwand
- 13: inneres Gehäuse, innere Wand, Brennraumwand
- 14: Gebläse
- 16: Ejektor
- 17: Treibfluidströmung
- 18: angeregte Strömung
- U: Umfangsrichtung
- I: Zuführleitung
- α: Anstellwinkel der Treibmediumsströmung gegen die Umfangsrichtung

## Patentansprüche

1. Verfahren zum Betreiben einer Turbomaschine mit mindestens einer zwischen einem Innengehäuse und einem Außengehäuse gebildeten torusabschnitt- oder torusförmigen Kavität (7), wobei während des Betriebs der Turbomaschine eine mit wenigstens einer Geschwindigkeitskomponente in Umfangsrichtung der Turbomaschine oder des Torus orientierte, umlaufende Umfangsströmung (18) in der Kavität angeregt wird, wobei die Strömung durch ein aus wenigstens einem Ejektor (16) mit einer Umfangs-Geschwindigkeitskomponente austretendes Fluid (17), angeregt wird
**dadurch gekennzeichnet,**
**daß** innerhalb der Kavität (7), mit im wesentlichen ringförmigem Querschnitt eine in Umfangsrichtung orientierte, schraubenförmige Strömung angeregt wird, bei der das verwendete Fluid (17) in axialer Richtung in einem Winkel (α) von mehr als 0°, aber weniger als 30°, vorzugsweise weniger als 10°, gegen die Umfangsrichtung (U) der Kavität (7) aus dem Ejektor ausgeblasen wird.

2. Verfahren nach Anspruch 1, **gekennzeichnet durch** den weiteren Schritt, ein Kühlfluid von aussen zuzuführen.

3. Verfahren nach einem der Ansprüche 1 oder 2, **dadurch gekennzeichnet, dass** als Fluid von einem Fördermittel, insbesondere einem Gebläse oder einem Verdichter, Umgebungsluft herangeführt wird.

4. Verfahren nach einem der Ansprüche 1 oder 2, **dadurch gekennzeichnet, dass** das Fluid aus einem Verdichter einer Gasturbogruppe entnommen wird.

5. Verfahren nach einem der Ansprüche 1 oder 2, **dadurch gekennzeichnet, dass** das Fluid aus einem Kühlluftsystem einer Gasturbogruppe entnommen wird.

6. Verfahren nach einem der vorstehenden Ansprüche, **gekennzeichnet durch** die weiteren Schritte: die Turbomaschine im Leistungsbetrieb zu betreiben; die umfangsorientierte Strömung während des Betriebs der Turbomaschine kontinuierlich anzuregen; die Turbomaschine abzustellen; und die umfangsorientierte Strömung während einer Abkühiphase intermittierend anzuregen.

7. Turbomaschine, umfassend ein Innengehäuse (13), ein Aussengehäusse (11), eine zwischen dem Innengehäuse und dem Aussengehäuse angeordnete Kavität (7), sowie wenigstens einen in der Kavität angeordneten mit einem Treibfluid betreibbaren Ejektor (16), **gekennzeichnet durch** ein ringförmiges Treibfluidplenum und eine Zuführleitung(I) für das Treibfluid, welche in das Treibfluidplenum mündet, wobei der Ejektor mit dem Treibfluidplenum in Fluidverbindung steht.

8. Turbomaschine gemäss Anspruch 7, **dadurch gekennzeichnet, dass** innerhalb der Kavität eine Mehrzahl von Ejektoren angeordnet sind, die alle mit der Treibfluidplenum in Fluidverbindung stehen.

9. Turbomaschine gemäss Anspruch 8, **dadurch gekennzeichnet, dass** in Umfangsrichtung mehrere Ejektoren äquidistant angeordnet sind.

## Claims

1. Method for operating a turbo engine with at least one cavity (7) in the form of a portion of a torus or toroidal, formed between an inner casing and outer casing, during the operation of the turbo engine, a circular circumferential flow (18) oriented with at least one velocity component in the circumferential direction of the turbo engine or of the torus being activated in the cavity, the flow being activated by a fluid (17) emerging from at least one ejector (16) with a circumferential velocity component, **characterized in that**, within the cavity (7) of essentially annular cross section, helical flow oriented in a circumferential direction is activated, in which the fluid (17) used is blown out of the ejector in the axial direction at an angle (α) of more than 0° but less than 30°, preferably of less than 10°, with respect to a circumferential direction (U) from the cavity (7).

2. Method according to Claim 1, **characterized by** the further step of supplying a cooling fluid from outside.

3. Method according to one of Claims 1 or 2, **characterized in that** ambient air is delivered as fluid by a conveying means, in particular a blower or a compressor.

4. Method according to one of Claims 1 or 2, **characterized in that** the fluid is extracted from the compressor of a gas turbo group.

5. Method according to one of Claims 1 or 2, **characterized in that** the fluid is extracted from a cooling air system of a gas turbo group.

6. Method according to one of the preceding claims, **characterized by** the further steps of operating the turbo engine in power operation, of continuously activating the circumferentially oriented flow during the operation of the turbo engine, of shutting down the turbo engine and intermittently activating the circumferential oriented flow during a cooling phase.

7. Turbo engine, comprising an inner casing (13), an outer casing (11), a cavity, arranged between the inner casing and the outer casing, and at least one ejector (16) arranged in the cavity and capable of being operated with a propelling fluid, **characterized by** an annular propelling fluid plenum and a supply line (I), which issues into the propelling fluid plenum, for the propelling fluid, the ejector being fluidically connected to the propelling fluid plenum.

8. Turbo engine according to Claim 7, **characterized in that** a plurality of ejectors which are all connected fluidically to the propelling fluid plenum are arranged within the cavity.

9. Turbo engine according to Claim 8, **characterized in that** a plurality of ejectors are arranged equidistantly in the circumferential direction.

## Revendications

1. Procédé pour faire fonctionner une turbomachine, comprenant au moins une cavité (7) en forme de section de tore ou en forme de tore, formée entre un carter interne et un carter externe, un écoulement périphérique (18) étant produit dans la cavité pendant le fonctionnement de la turbomachine, avec au moins une composante de vitesse orientée dans la direction périphérique de la turbomachine ou du tore, l'écoulement étant produit par un fluide (17) sortant d'au moins un éjecteur (16), avec une composante de vitesse périphérique,
**caractérisé en ce que**
à l'intérieur de la cavité (7), avec une section transversale sensiblement annulaire, est produit un écoulement hélicoïdal orienté dans la direction périphérique, le fluide utilisé (17) étant soufflé hors de l'éjecteur dans la direction axiale suivant un angle (α) de plus de 0°, mais inférieur à 30°, de préférence inférieur à 10°, à l'écart de la direction périphérique (U) de la cavité (7).

2. Procédé selon la revendication 1, **caractérisé par** l'étape supplémentaire consistant à acheminer un fluide de refroidissement depuis l'extérieur.

3. Procédé selon l'une quelconque des revendications 1 ou 2, **caractérisé en ce que** l'on utilise comme fluide de l'air ambiant fourni par un moyen de refoulement, notamment une soufflante ou un compresseur.

4. Procédé selon l'une quelconque des revendications 1 ou 2, **caractérisé en ce que** le fluide est prélevé d'un compresseur d'un groupe générateur à turbine à gaz.

5. Procédé selon l'une quelconque des revendications 1 ou 2, **caractérisé en ce que** le fluide est prélevé d'un système d'air de refroidissement d'un groupe générateur à turbine à gaz.

6. Procédé selon l'une quelconque des revendications précédentes, **caractérisé par** les étapes supplémentaires consistant à faire fonctionner la turbomachine en mode de puissance ; à produire en continu l'écoulement orienté suivant la périphérie pendant le fonctionnement de la turbomachine ; à arrêter la turbomachine ; et à produire sous forme intermittente l'écoulement orienté suivant la périphérie pendant une phase de refroidissement.

7. Turbomachine, comprenant un carter interne (13), un carter externe (11), une cavité (7) disposée entre le carter interne et le carter externe, ainsi qu'au moins un éjecteur (16) pouvant fonctionner avec un fluide propulseur et disposé dans la cavité, **caractérisée par** une chambre de fluide propulseur annulaire et une conduite d'amenée (I) pour le fluide propulseur, qui débouche dans la chambre de fluide propulseur, l'éjecteur étant en liaison fluidique avec la chambre de fluide propulseur.

8. Turbomachine selon la revendication 7, **caractérisée en ce qu'**une pluralité d'éjecteurs est disposée à l'intérieur de la cavité, les éjecteurs étant tous en liaison fluidique avec la chambre de fluide propulseur.

9. Turbomachine selon la revendication 8, **caractérisée en ce que** plusieurs éjecteurs sont disposés de manière équidistante dans la direction périphérique.
